# EUROPEAN PATENT SPECIFICATION

(11) **EP 4 187 363 B1**
(45) Date of publication and mention of the grant of the patent: **25.09.2024**
(21) Application number: 20947232.3
(22) Date of filing: 31.07.2020
(51) Int. Cl.: G06F 3/06, G06F 12/02

(54) **STORAGE CONTROLLER, STORAGE CONTROL METHOD, SOLID STATE DISK AND STORAGE SYSTEM**
SPEICHERSTEUERUNG, SPEICHERSTEUERVERFAHREN, FESTKÖRPERPLATTE UND SPEICHERSYSTEM
CONTRÔLEUR DE STOCKAGE, PROCÉDÉ DE CONTRÔLE DE STOCKAGE, DISQUE À SEMI-CONDUCTEURS ET SYSTÈME DE STOCKAGE

(43) Date of publication of application: 31.05.2023
(73) Proprietor: Huawei Technologies Co., Ltd., Shenzhen, Guangdong 518129 (CN)
(72) Inventor: WANG, Jinwei, Shenzhen, Guangdong 518129 (CN); RAN, Yi, Shenzhen, Guangdong 518129 (CN); HUANG, Enzou, Shenzhen, Guangdong 518129 (CN); WU, Bo, Shenzhen, Guangdong 518129 (CN); CHEN, Linfeng, Shenzhen, Guangdong 518129 (CN)
(74) Representative: Epping - Hermann - Fischer
(86) International application number: PCT/CN2020/106090
(87) International publication number: WO 2022/021280

(56) References cited:
- WO-A1-2019/080688
- CN-A- 105 224 240
- CN-A- 105 224 240
- CN-A- 105 243 025
- CN-A- 105 808 156
- CN-A- 105 808 156
- CN-A- 111 026 678
- US-A1- 2012 284 587

## Description

### TECHNICAL FIELD

This application relates to the field of storage technologies, and in particular, to a storage controller, a storage control method, a solid state disk, and a storage system.

### BACKGROUND

A current storage system may use a form of distributed storage, network-attached storage (network-attached storage, NAS), a storage area network (storage area network, SAN), or the like. A solid state disk (solid state disk, SSD) is applied to the foregoing various storage systems because of advantages of high bandwidth, low latency, and high throughput. In the storage system, a host (host) may access the SSD based on a logical block address (logical block address, LBA) of a flash memory of the SSD. In a process in which the host writes data into the flash memory of the SSD, a very small LBA area may account for a very high write ratio. For example, when a database application running on a host side writes data into an SSD, only one LBA area occupying about 16 MB accounts for about 30% of a total amount of written data of the SSD. A service life of the SSD is related to a total write quantity of the LBA. When the total write quantity of the LBA of the SSD reaches a preset upper limit, writing cannot continue, thereby affecting the service life of the SSD. Therefore, how to avoid impact on the total write quantity of the LBA of the SSD and further impact on the service life of the SSD because some very small LBA areas each account for a very high write ratio is an urgent problem to be resolved.

In a conventional technology, a data writing method in which a host is participated is proposed. In this method, the host specifies a namespace (namespace) corresponding to an LBA area accounting for a high write ratio. The SSD expands a namespace function. For data that needs to be written into the specific namespace, the SSD writes the data into a specific storage medium, for example, a dynamic random access memory (Dynamic Random Access Memory, DRAM), a magnetic random access memory (Magnetic Random Access Memory, MRAM), or a phase change memory (Phase change memory, PCM), but does not directly write the data into a flash memory. Only when the SSD is powered off, the data in the foregoing specific storage medium is written into the flash memory, to prevent some very small LBA areas from being frequently written.

However, by using the method in the conventional technology, if different host sides need to access the SSD, the host sides need to adapt to the SSD to prevent some very small LBA areas from being frequently written when data is written into the SSD, resulting in a very high coupling degree between the host and the SSD.

US 2012/284587 A1 discloses a flash drive having increased endurance and longevity by reducing writes to flash. An Endurance Translation Layer (ETL) is created in a DRAM buffer and provides temporary storage to reduce flash wear. A Smart Storage Switch (SSS) controller assigns data-type bits when categorizing host accesses as paging files used by memory management, temporary files, File Allocation Table (FAT) and File Descriptor Block (FDB) entries, and user data files, using address ranges and file extensions read from FAT. Paging files and temporary files are never written to flash. Partial-page data is packed and sector mapped by sub-sector mapping tables that are pointed to by a unified mapping table that stores the data-type bits and pointers to data or tables in DRAM. Partial sectors are packed together to reduce DRAM usage and flash wear. A spare/swap area in DRAM reduces flash wear. Reference voltages are adjusted when error correction fails.

### SUMMARY

The invention is defined in the claims. In the following, parts of the description and drawings referring to embodiments which are not covered by the claims are not presented as embodiments of the invention, but as examples useful for understanding the invention.

Embodiments of this application provide a storage controller, a storage control method, a solid state disk, and a storage system, to resolve a conventional-technology problem that a coupling degree between a host and an SSD is very high because a very small LBA area is frequently written and adaptation is required on the host side.

According to a first aspect, an embodiment of this application provides a storage controller. The storage controller includes a processor, and a first interface and a memory that are separately coupled to the processor. The first interface is configured to receive data write instructions, where each data write instruction is used to request to write target data into a logical address of a flash memory. The processor is configured to read, from the memory, a hotspot attribute corresponding to the respective logical address. If the hotspot attribute indicates that the respective logical address is a hotspot address, the processor is further configured to store the target data in a first area of the memory. The first area is used to replace storage space that is corresponding to logical addresses in the flash memory controlled by the storage controller to store data.

In the foregoing storage controller, the processor may pre-identify whether each logical address of the flash memory is the hotspot address. After receiving the data write instruction for the hotspot address, the processor writes target data that needs to be written into the hotspot address into the first area. The first area is used to replace storage space that is corresponding to the hotspot address and that is in the flash memory controlled by the storage controller to store the data. Therefore, frequent data access to the hotspot address may be performed in the first area instead of the flash memory, to avoid a rapid increase in a total write quantity of the SSD caused by frequent access to a very small LBA area used as the hotspot address, thereby ensuring that a service life of the SSD is not affected. In the foregoing processing process, the SSD performs identification and processing based on previous access information of the logical address, and the host side does not need to participate. While the storage controller prevents some very small LBA areas from being frequently written, to ensure that the service life of the SSD is not affected, the host side does not need to participate, and the host side does not need to adapt to the SSD. Therefore, a coupling degree between the host and the SSD can be greatly reduced.

In a possible implementation, the processor is configured to: read cache status information of the respective logical address from the memory, and write the target data into the first area based on the cache status information, where the cache status information indicates whether data of the respectivelogical address already exists in the first area.

Because the cache status information can accurately indicate whether the data of the first logical address already exists in the first area, writing the target data into the first area based on the cache status information can ensure correct data writing.

In the foregoing possible implementation, in one case, if the cache status information indicates that the data of the respective logical address already exists in the first area, the processor replaces the data of the respective logical address that has been stored in the first area with the target data.

When the cache status information of the first logical address indicates that the data of the first logical address already exists in the first area, it indicates that data that needs to be written into the first logical address last time already exists in the first area. Therefore, the existing data is replaced, that is, the target data is written into a location at which the data written into the first logical address last time in the first area is stored, to overwrite the previously written data, thereby ensuring correct data writing.

In the foregoing possible implementation, in another case, if the cache status information indicates that the data of the respective logical address does not exist in the first area, the processor writes the target data into the first area, and updates the cache status information of the respective logical address to information indicating that the data of the respective logical address already exists in the first area.

If the cache status information of the first logical address indicates that the data of the first logical address does not exist in the first area, it indicates that the data of the first logical address is not stored in the first area. Therefore, the target data may be directly written into the first area as the data of the first logical address, thereby ensuring correct data writing. In addition, after the target data is written into the first area, if the cache status information of the first logical address is updated to the information indicating that the data of the first logical address already exists in the first area, it indicates that the data of the first logical address already exists in the first area. Therefore, when the host writes data into the first logical address next time, the controller of the SSD may perform the foregoing replacement processing based on the information indicating that the data of the first logical address already exists in the first area, thereby further ensuring correct data writing.

The processor is further configured to update a hotspot attribute of each logical address based on previous access information of each logical address; and separately write the hotspot attribute of each logical address into the memory.

The processor updates the hotspot attribute of each logical address based on the previous access information of each logical address and a capacity of the first area, wherein the capacity of the first area is the quantity of logical addresses for which the first area can store data.

The capacity of the first area may be small. Therefore, which logical addresses are used as hotspot addresses is determined based on the previous access information of each logical address and the capacity of the first area, so that it can be ensured that a quantity of selected hotspot addresses matches the capacity of the first area. In addition, selecting the hotspot address based on the capacity of the first area can further select a better hotspot address.

The processor performs statistics collection on the previous access information of each logical address in the solid state disk, to obtain a quantity of write times of each logical address; then obtains the hotspot addresses based on the quantity of write times of each logical address and the capacity of the first area; and further updates the hotspot attribute of each logical address based on the hotspot address in each logical address.

The hotspot address in each logical address is obtained based on the quantity of write times and the capacity of the first area, so that accuracy of an identified hotspot address is higher.

If a difference obtained by subtracting the capacity of the first area from a quantity of logical addresses, whose quantity of write times is greater than 0, is greater than or equal to a first preset threshold, the processor selects those logical addresses as the hotspot addresses, whose quantity of write times is greater than or equal to a first preset quantity of times, or selects a preset quantity of logical addresses, whose quantity of write times is the largest, after the logical addresses, whose quantity of write times is greater than 0, are sorted based on the quantity of write times.

If the difference obtained by subtracting the capacity of the first area from the quantity of logical addresses whose quantity of write times is greater than 0 is greater than or equal to the first preset threshold, it indicates that the quantity of logical addresses whose quantity of write times is greater than 0 far exceeds the capacity of the first area. When the condition is met, the selected hotspot address has better effect, and can better match the capacity of the first area. When the condition is met, the controller may use the target logical address as the hotspot address.

In an example not forming part of the invention, if a difference obtained by subtracting the capacity of the first area from a quantity of logical addresses whose quantity of write times is greater than 0 is greater than or equal to a first preset threshold, the processor selects a target logical address as a to-be-selected hotspot address, where the target logical address is a logical address whose quantity of write times is greater than or equal to a first preset quantity of times, or the target logical address is a preset quantity of logical addresses whose quantity of write times is the largest after most of the logical addresses whose quantity of write times is greater than 0 are sorted based on the quantity of write times. If a ratio of a sum of written data amounts of the to-be-selected hotspot address to a total amount of written data, of the solid state disk, within a statistical period of the previous access information is greater than or equal to a second preset threshold, the processor uses the to-be-selected hotspot address as the hotspot address.

In this manner, authenticity of the selected to-be-selected hotspot address may be confirmed, thereby further improving accuracy of a finally determined hotspot address.

In the foregoing example, after the to-be-selected hotspot address is obtained, if a quantity of access times of a first to-be-selected hotspot address is greater than a second preset quantity of times, the processor uses the first to-be-selected hotspot address as a hotspot address, where the first to-be-selected hotspot address is any address in the to-be-selected hotspot address.

In a possible implementation, the processor may update the hotspot attribute of each logical address based on a hotspot address set in a first period and a hotspot address set in a second period, where the first period is the statistical period of the previous access information, and the second period is a period before the first period.

Because the hotspot address set in the first period and the hotspot address set in the second period respectively store hotspot addresses in respective periods, a change of the hotspot address from the second period to the first period may be learned based on the two hotspot address sets, and correspondingly, the hotspot attribute of each logical address may be accurately updated.

In the foregoing possible implementation, if a first address belongs to the hotspot address set in the second period but does not belong to the hotspot address set in the first period, the processor updates a hotspot attribute of the first address to a mark used to identify a non-hotspot address, where the first address is any one of the logical addresses.

In the foregoing possible implementation, the processor may further write data, in the first area, of the first address into a second area, and delete the data of the first address from the first area. When the solid state disk is in a power-on state, the data stored in the second area is written into the flash memory of the solid state disk according to a preset frequency.

Because the first address is no longer the hotspot address, an access frequency of the first address is reduced. Therefore, the data of the first address is written into the flash memory by using the second area, so that the data of the first address no longer occupies a resource of the first area, and a total write amount of the flash memory does not increase rapidly.

In the foregoing possible implementation, if the first address belongs to the hotspot address set in the first period but does not belong to the hotspot address set in the second period, the processor updates the hotspot attribute of the first address to a mark used to identify the hotspot address.

In the foregoing possible implementation, the processor may further update cache status information of the first address to the information indicating that the data of the first logical address does not exist in the first area.

When the first address is the hotspot address, the data of the first address is updated at a high frequency. Therefore, only the cache status information of the first address is updated to the information indicating that the data of the first logical address does not exist in the first area, and data movement is not performed. When the host sends a write instruction for the first address next time, the data may be directly written into the first area. Therefore, processing complexity of this manner is low, and data access to the first address is not affected.

In the foregoing possible implementation, the processor may further write data, in the second area, of the first address into the first area, and delete the data of the first address from the second area; and update the cache status information of the first address to the information indicating that the data of the first logical address already exists in the first area.

The data, stored in the second area, of the first address is data that needs to be written into the first address last time. The data is written into the first area, that is, data movement is performed, and the cache status information of the first address is updated to the information indicating that the data of the first logical address already exists in the first area. This can ensure that before data of the first address is written next time, when the host needs to read the data of the first address, the host can quickly read the data of the first address from the first area.

In a possible implementation, the processor may perform sampling statistics collection on the previous access information of each logical address, to obtain the quantity of write times of each logical address.

In a possible implementation, if the first logical address is not the hotspot address, the processor may write the target data into the second area.

According to a second aspect, an embodiment of this application provides a storage control method. The method is applied to a storage controller for flash memory, the storage controller includes a memory, and the method includes: receiving data write instructions, where each data write instruction is used to request to write target data into a logical address of the flash memory; for each received data write instruction, reading, from the memory, a hotspot attribute of the respective logical address; and if the hotspot attribute indicates that the respective logical address is a hotspot address, storing the target data in a first area of the memory. The first area is used to replace storage space that is corresponding to logical addresses in the flash memory to cache data to be written into the hotspot address.

In a possible implementation, the storing the target data in a first area of the memory includes:
reading cache status information of the respective logical address from the memory, and writing the target data into the first area based on the cache status information, where the cache status information indicates whether data of the respective logical address already exists in the first area.

In a possible implementation, the writing the target data into the first area based on the cache status information includes:
if the cache status information indicates that the data of the respective logical address already exists in the first area, replacing the data of the respective logical address that has been stored in the first area with the target data.

In a possible implementation, the writing the target data into the first area based on the cache status information includes:
if the cache status information indicates that the data of the respective logical address does not exist in the first area, writing the target data into the first area, and updating the cache status information of the respective logical address to information indicating that the data of the respective logical address already exists in the first area.

The method further includes:
updating a hotspot attribute of each logical address based on previous access information of each logical address; and separately writing the hotspot attribute of each logical address into the memory.

The updating a hotspot attribute of each logical address based on previous access information of each logical address includes:
updating the hotspot attribute of each logical address based on the previous access information of each logical address and a capacity of the first area, wherein the capacity of the first area is the quantity of logical addresses for which the first area can store data.

The updating the hotspot attribute of each logical address based on the previous access information of each logical address and a capacity of the first area includes:
performing statistics collection on the previous access information of each logical address, to obtain a quantity of write times of each logical address; obtaining the hotspot addresses based on the quantity of write times of each logical address and the capacity of the first area; and updating the hotspot attribute of each logical address based on the hotspot address in each logical address.

The obtaining the hotspot addresses based on the quantity of write times of each logical address and the capacity of the first area comprises:
if a difference obtained by subtracting the capacity of the first area from a quantity of logical addresses, whose quantity of write times is greater than 0, is greater than or equal to a first preset threshold, selecting those logical addresses as the hotspot addresses, whose quantity of write times is greater than or equal to a first preset quantity of times, or selecting a preset quantity of logical addresses as hotspot addresses, whose quantity of write times is the largest, after the logical addresses, whose quantity of write times is greater than 0, are sorted based on the quantity of write times.

In an example not forming part of the invention, the obtaining a hotspot address in each logical address based on the quantity of write times of each logical address and the capacity of the first area includes:
if a difference obtained by subtracting the capacity of the first area from a quantity of logical addresses whose quantity of write times is greater than 0 is greater than or equal to a first preset threshold, selecting a target logical address as a to-be-selected hotspot address, where the target logical address is a logical address whose quantity of write times is greater than or equal to a first preset quantity of times, or the target logical address is a preset quantity of logical addresses whose quantity of write times is the largest after most of the logical addresses whose quantity of write times is greater than 0 are sorted based on the quantity of write times; and if a ratio of a sum of written data amounts of the to-be-selected hotspot address to a total amount of written data within a statistical period of the previous access information is greater than or equal to a second preset threshold, using the to-be-selected hotspot address as the hotspot address.

In a possible implementation, the method further includes:
if a quantity of access times of a first to-be-selected hotspot address is greater than a second preset quantity of times, use the first to-be-selected hotspot address as a hotspot address, wherein the first to-be-selected hotspot address is any address in the to-be-selected hotspot address.

In a possible implementation, the updating the hotspot attribute of each logical address based on the hotspot address in each logical address includes:
updating the hotspot attribute of each logical address based on a hotspot address set in a first period and a hotspot address set in a second period, where the first period is the statistical period of the previous access information, and the second period is a period before the first period.

In a possible implementation, the updating the hotspot attribute of each logical address based on a hotspot address set in a first period and a hotspot address set in a second period includes:
if a first address belongs to the hotspot address set in the second period but does not belong to the hotspot address set in the first period, updating a hotspot attribute of the first address to an attribute used to identify a non-hotspot address, where the first address is any one of the logical addresses.

In a possible implementation, the method further includes:
writing data, in the first area, of the first address into a second area, and deleting the data of the first address from the first area, where the second area is used to cache data to be written into the non-hotspot address.

In a possible implementation, the updating the hotspot attribute of each logical address based on a hotspot address set in a first period and a hotspot address set in a second period includes:
if the first address belongs to the hotspot address set in the first period but does not belong to the hotspot address set in the second period, updating the hotspot attribute of the first address to an attribute used to identify the hotspot address.

In a possible implementation, the method further includes:
updating cache status information of the first address to the information indicating that the data of the first logical address does not exist in the first area.

In a possible implementation, the method further includes:
writing data, in the second area, of the first address into the first area, and deleting the data of the first address from the second area; and updating cache status information of the first address to the information indicating that the data of the first logical address already exists in the first area.

In a possible implementation, the performing statistics collection on the previous access information of each logical address, to obtain a quantity of write times of each logical address includes:
performing sampling statistics collection on the previous access information of each logical address, to obtain the quantity of write times of each logical address.

In a possible implementation, the processor is further configured to:
if the hotspot attribute indicates that the first logical address is not the hotspot address, store the target data in the second area of the memory.

According to a third aspect, an embodiment of this application provides a solid state disk, including a flash memory and the storage controller described in the first aspect. The storage controller performs data access in the flash memory by using a second interface.

According to a fourth aspect, an embodiment of this application provides a storage system, including the solid state disk described in the third aspect and a host, where the solid state disk communicates with the host based on a first interface of the solid state disk and a host interface of the host.

According to a fifth aspect, an embodiment of this application provides a computer-readable storage medium, where the computer storage medium stores computer instructions, and when the computer instructions are executed, a computer is enabled to perform the method according to the second aspect.

### BRIEF DESCRIPTION OF DRAWINGS

FIG. 1 is a schematic diagram of data access of a conventional database system;
FIG. 2 is a diagram of an example system architecture according to an embodiment of this application;
FIG. 3 is an interaction flowchart of a storage control method according to an embodiment of this application;
FIG. 4 is a diagram of another example system architecture according to an embodiment of this application; and
FIG. 5 is a schematic flowchart of a storage control method according to an embodiment of this application.

### DESCRIPTION OF EMBODIMENTS

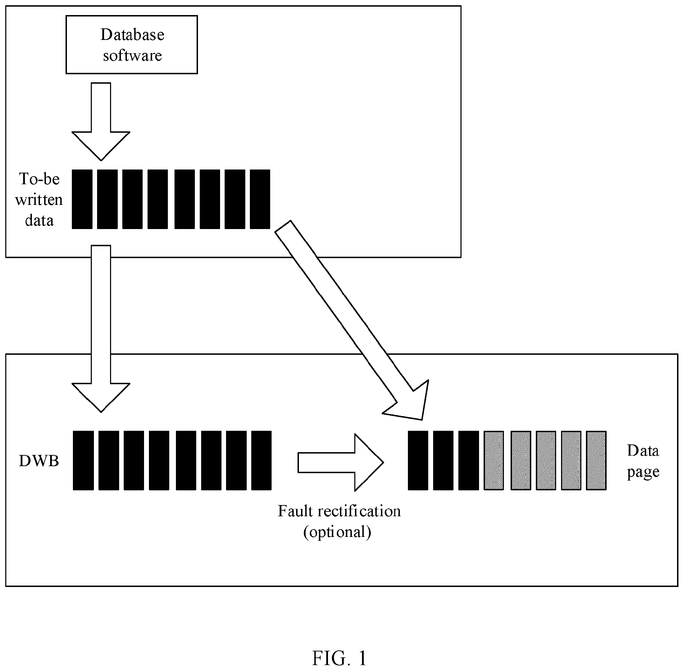

FIG. 1 is a schematic diagram of data access of a conventional database system. As shown in FIG. 1, a shared table space independent of a table file is set in a flash memory of the database system, and may be referred to as a dual-write buffer (double write buffer, DWB). When data is written into the flash memory of the SSD, data that needs to be written is first written into the DWB, and after the database system confirms that the data is successfully written into the DWB, the data is written into a corresponding data page of the table file. In this manner, data page damage in an operating system restart or power-off scenario can be prevented. Specifically, the DWB and the data page of the table file are written into different locations of a disk at different time. Therefore, the DWB and the data page may not be damaged at the same time. Therefore, in the operating system restart or power- off scenario, if the DWB is damaged, damaged data in the DWB may be discarded, and old data is stored in the data page; or if the data page is damaged, the data page is recovered based on the data stored in the DWB.

In a storage space of the foregoing database system, the DWB occupies only a very small LBA area, and a size of the LBA area is about 16 MB. Because the DWB is set, the small LBA area occupied by the DWB is frequently written. Statistics show that a segment of the 16 MB small LBA area can account for about 30% of a total amount of written data in the storage space. The small LBA area has a very high write ratio. As a result, a total write quantity of the LBA of the SSD increases rapidly, and a service life of the SSD is greatly affected.

To resolve the foregoing problem, in an existing possible design, in a host participation manner, the host specifies, for the SSD, a namespace (namespace) corresponding to the LBA area having the high write ratio. For data that needs to be written to the namespace corresponding to the LBA area having the high write ratio, the SSD does not directly write the data into the flash memory, but writes the data into a storage medium such as a DRAM, an MRAM, or a PCM. The data in these storage media is written into the flash memory only when the SSD is powered off, to prevent some very small LBA areas from being frequently written. In this design manner, the namespace corresponding to the LBA area that has the high write ratio needs to be specified on the host side. Therefore, before a host needs to access an SSD, the host first needs to adapt to the SSD, to support a function of specifying a namespace for the SSD. This manner causes a very high coupling degree between the host and the SSD.

In the existing design, the host side needs to participate to avoid a problem of the very high coupling degree between the host and the SSD caused by some very small LBA areas being frequently written, in this embodiment of this application, the SSD side determines, based on previous access information of the logical address, whether the logical address is a hotspot address, and caches the data that needs to be written into the hotspot address. In this way, while some very small LBA areas are prevented from being frequently written, to ensure that the service life of the SSD is not affected, the host side does not need to participate, and the host side does not need to adapt to the SSD. Therefore, the coupling degree between the host and the SSD is greatly reduced.

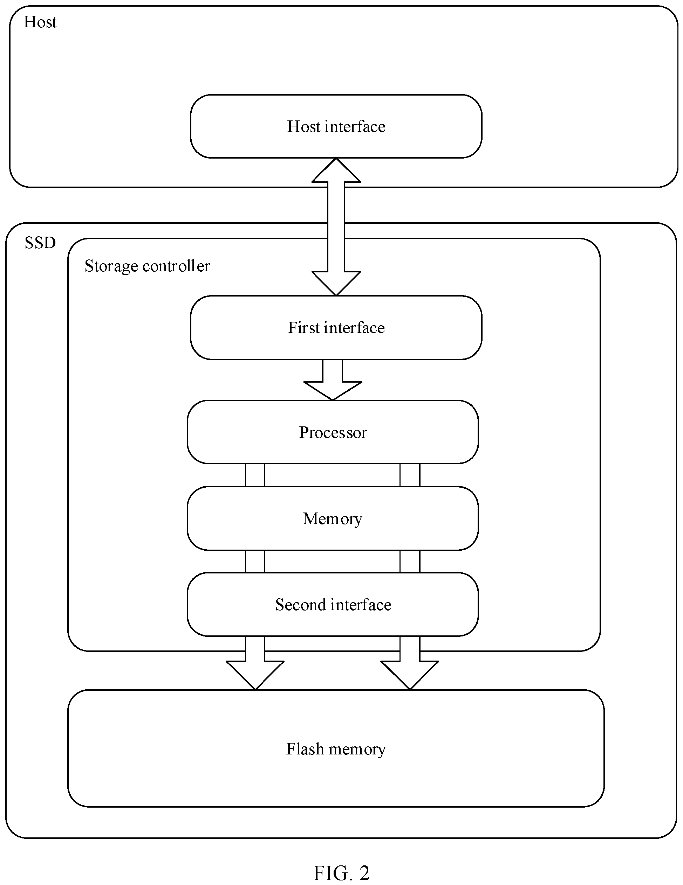

FIG. 2 is a diagram of an example system architecture according to an embodiment of this application. As shown in FIG. 2, this embodiment of this application relates to a host and an SSD. A communication connection is preestablished between the host and the SSD. The communication connection may be a wired connection, or may be a wireless connection. This is not specifically limited in this embodiment of this application.

In this embodiment of this application, the host may also be referred to as a client or the like. A user may read data from the SSD or write data into the SSD by using the host. For example, client software of a database system is installed on the host side, and a database of the database system is stored in the SSD. The user inputs, in an interface of the client software, data that needs to be written into the database and indicates to write the data. The host generates a data write instruction based on the instruction of the user, and sends the data write instruction to the SSD. As shown in FIG. 2, the host may send the data write instruction to a first interface on the storage device by using a host interface on the host.

Refer to FIG. 2. The SSD may include at least a storage controller and a flash memory. The storage controller may include a processor, and a first interface and a memory that are separately coupled to the processor. In addition, the storage controller may further include a second interface.

The flash memory may include several flash memory chips. Each flash memory chip includes several blocks (block), and each block includes several pages (page). When data is written into the flash memory, the data may be written by page. The storage controller writes data into the flash memory and reads data from the flash memory by using the second interface.

In the storage controller, the first interface is connected to a host side, and is used to receive a data access instruction from the host side. In this embodiment of this application, the data access instruction may be a data write instruction. The first interface is used to receive the data write instruction. The processor may be, for example, a central processing unit (central processing unit, CPU). The memory may include a volatile memory such as a DRAM, an MRAM, or a PCM, or the memory may further include a nonvolatile memory. The processor may receive, from the first interface, the data write instruction or other information from the host, for example, a logical address of a data block. The processor may further execute the received data write instruction, for example, write a data block carried in the data write instruction into the flash memory or the memory, or read a data block from the flash memory or the memory.

As described above, the first interface of the storage controller may receive a data write instruction from a network interface card on the host side. In this embodiment of this application, after receiving the data write instruction, the first interface may send the data write instruction to the processor of the storage controller, and the processor writes data based on the solution in this embodiment of this application. Alternatively, after receiving the data write instruction, the first interface may send the data write instruction to another processing module of the storage controller, and the processing module writes data based on the solution in this embodiment of this application. Alternatively, the processor may cooperate with another processing module to complete the processing. For ease of description, an example in which the following embodiments of this application are executed by the processor of the storage controller is used for description.

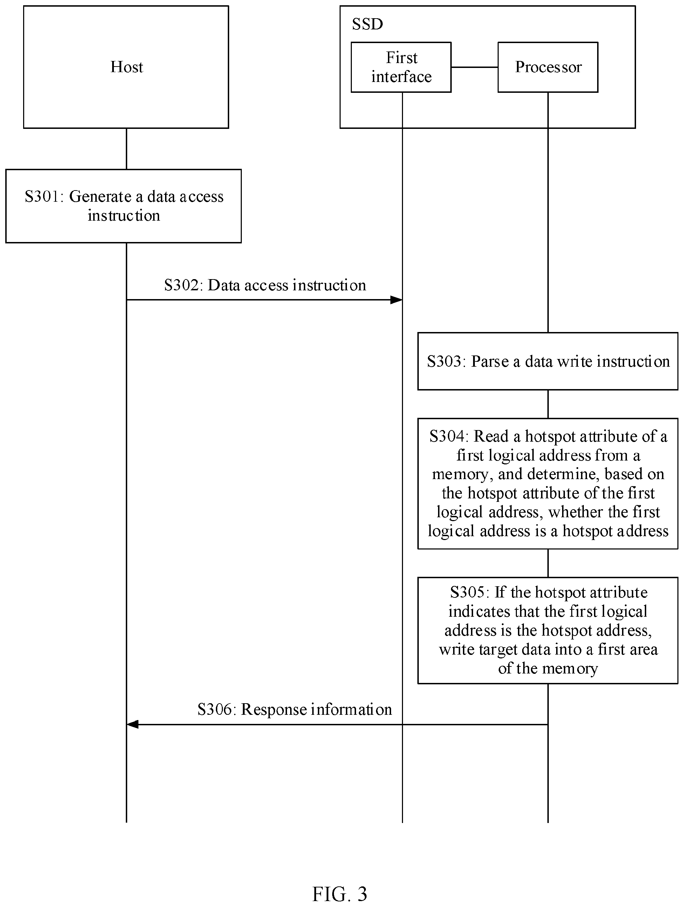

FIG. 3 is an interaction flowchart of a storage control method according to an embodiment of this application. As shown in FIG. 3, an interaction process between a host and an SSD includes the following steps.

S301: The host generates a data write instruction.

As shown in the foregoing example, in an application scenario of a database system, client software of the database system may be installed on the host side, and a database of the database system is stored in the SSD. When the user needs to write data into the database, the user may enter, in an interface of the client software, to-be-written data and indicate to write the data. The host generates the data write instruction based on the instruction of the user.

S302: The host sends the data write instruction to a first interface of a storage controller of the SSD by using a host interface on the host.

Correspondingly, the first interface of the storage controller of the SSD receives the data write instruction from the host interface of the host.

S303: A processor of the storage controller parses the data write instruction.

After the first interface receives the data write instruction, the processor reads the data write instruction by using the first interface, and parses the data write instruction.

In this embodiment of this application, the data write instruction is used to request to write a target data into a first logical address. For example, the data write instruction includes the first logical address and the target data. Therefore, the processor may learn of the first logical address and the target data by parsing the data write instruction.

It should be understood that the first logical address in this embodiment of this application is a logical address. Optionally, the first logical address may be an LBA.

As described above, the LBA refers to a logical block address of the flash memory of the SSD, and the host accesses the SSD by using the LBA. However, in the SSD, a physical address for actually storing data is a physical page number (Physical Page Number, PPN). The PPN indicates a spatial location of the flash memory. After the data is written into the SSD, an LBA of the data may remain fixed, and is used by the host to access the data in the SSD by using the fixed LBA, but a PPN of the data may change. A mapping between the LBA and the PPN may be performed by using a flash translation layer (flash translation layer, FTL) table. For example, the host writes data A into the flash memory of the SSD for the first time, and the processor of the storage controller allocates an LBA 100 to the data A and a PPN 100 to the data A. Correspondingly, the processor records an LBA 100->PPN 100 mapping relationship in the FTL table. When the host needs to read data in the LBA 100, the host provides an address of LBA 100 to the SSD. The processor reads the data A from the PPN 100 and returns the data A to the host based on the LBA 100->PPN 100 mapping relationship. When the host needs to modify the data A of the LBA 100 to data B, the host sends a data write request to the SSD, where the data write request may carry the address of the LBA 100 and the data B. The processor may write the data B into another PPN 420 different from the PPN 100. Correspondingly, the processor modifies the LBA 100->PPN 100 mapping relationship in the FTL table to an LBA 100->PPN 420 mapping relationship. In this example, the LBA 100 presented by the SSD to the host remains unchanged, and the host always uses the LBA 100 to write or read data. However, when data of the LBA 100 is updated, a PPN actually written for the updated data changes compared with the PPN written for the data before the update.

This embodiment of this application mainly relates to a processing process in which the processor writes the data into the LBA. In a specific implementation process, the processor further writes the data into the actual PPN based on the LBA and the mapping relationship between the LBA and the PPN in the FTL table. For the processing process, refer to the description in the foregoing example. Details are not described subsequently.

S304: The processor of the storage controller reads a hotspot attribute of the first logical address from the memory, and determines, based on the hotspot attribute of the first logical address, whether the first logical address is a hotspot address.

Each logical address in the SSD has a hotspot attribute, and the hotspot attribute of each logical address may be obtained based on previous access information of each logical address.

Each logical address in the SSD may be a logical address in the flash memory of the SSD. For example, the logical address is an LBA. In this embodiment of this application, each LBA corresponds to a hotspot attribute. The hotspot attribute is used to identify whether one LBA is a hotspot address. Therefore, the processor may determine, based on the hotspot attribute, whether a logical address of the data write instruction is a hotspot address. It should be understood that when the logical address is the hotspot address, it indicates that data at the logical address is hotspot data. The following embodiments of this application are described from a perspective of the hotspot address.

In an example, the hotspot attribute of the first logical address may be recorded in the FTL table. The FTL table is stored in the foregoing memory. The FTL table records a mapping relationship between each LBA and a PPN in the flash memory of the SSD. Based on this, in this embodiment of this application, a hotspot attribute may be added to each LBA in the FTL table. In an example, the hotspot attribute may be represented by using one bit. When a value of the bit is 1, it indicates that the LBA is a hotspot address. When a value of the bit is 0, it indicates that the LBA is not a hotspot address, that is, is a non-hotspot address. When reading the hotspot attribute of the first logical address from the memory, the processor may search the FTL table stored in the memory for the hotspot attribute of the first logical address.

Optionally, the hotspot attribute of each logical address in the SSD may be obtained based on the previous access information of each logical address. The previous access information of the logical address may include, for example, an access time, and an access type being write or read. Based on the previous access information of the logical address, the processor may learn whether the logical address is frequently accessed, and may further identify whether the logical address is the hotspot address.

The processor may generate, after a preset duration after the SSD is powered on, the hotspot attribute of each logical address based on the previous access information of each logical address in the SSD within the preset duration. The hotspot attribute may be used as an initial hotspot attribute of each logical address. An access frequency of each logical address may be different in a different period. Therefore, the processor may further periodically update the hotspot attribute of the logical address based on a specific period. A processing process in which the processor generates the initial hotspot attribute and updates the hotspot attribute is described in detail in the following embodiment.

It should be understood that, in this embodiment of this application, the data writing process in steps S301 to S305 and the foregoing processing processes of generating the initial hotspot attribute and updating the hotspot attribute may be separately performed. When step S304 is performed, the used hotspot attribute of the logical address is a hotspot attribute of the logical address currently recorded in the FTL table.

S305: If the hotspot attribute indicates that the first logical address is the hotspot address, write the target data into a first area of the memory. The first area is used to replace storage space that is corresponding to the hotspot address and that is in the flash memory controlled by the storage controller to store data.

For example, when the SSD is in a power-on state, the data stored in the first area is not written into the flash memory of the solid state disk, but is written only into the first area. The data in the first area is written into the flash memory only when the SSD is powered off.

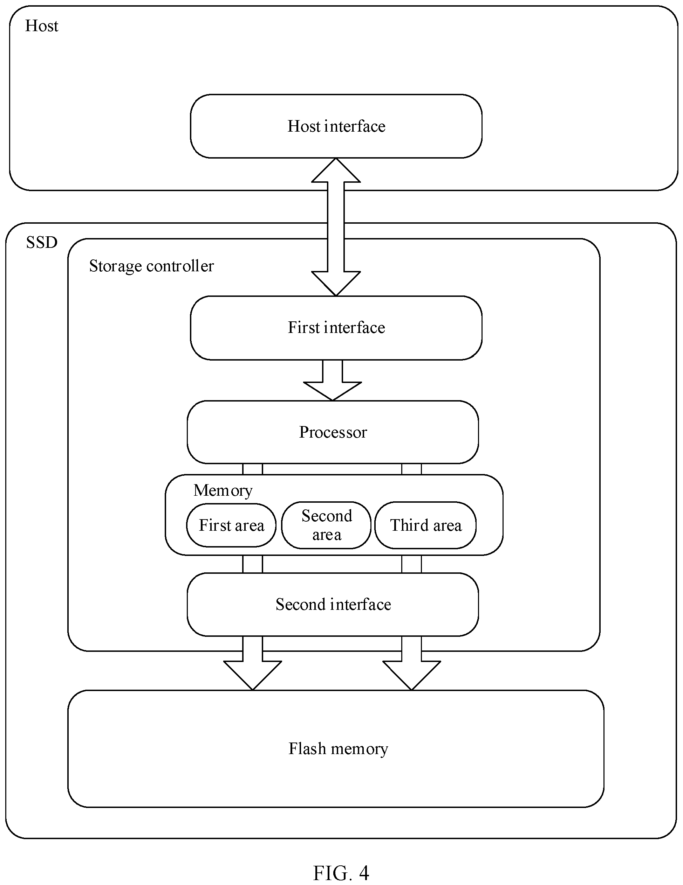

FIG. 4 is a diagram of another example system architecture according to an embodiment of this application. As shown in FIG. 4, based on FIG. 2, the memory may include a first area, a second area, and a third area. The third area is an area for storing the FTL table. After the SSD is powered on, provided that the SSD is in a power-on state, the data in the first area is not written into the flash memory of the SSD. Data in the second area is continuously written into the flash memory in a specific manner. For example, when the data in the second area reaches a preset proportion of a total storage capacity of the second area, the data in the second area is written into the flash memory once. In addition, the area for storing the FTL table may be used to store the foregoing FTL table.

After identifying that the first logical address is the hotspot address, the processor writes the target data indicated by the data write instruction into the first area. Because the data stored in the first area is used to replace the storage space that is corresponding to the hotspot address and that is in the flash memory controlled by the storage controller to store the data, for a logical address, after data of the address is stored in the first area, subsequent data writing and reading for the logical address may be performed in the first area. For example, when the data of the logical address needs to be modified, the modified data may be written into the first area to replace the data before the modification. After such processing, frequent data access to the hotspot address may be performed in the first area. Only in a specific condition, for example, when the SSD is powered off, the processor stores the data in the first area in the flash memory of the SSD, to avoid a rapid increase in a total write quantity of the SSD caused by frequent access to a very small LBA area used as the hotspot address, thereby ensuring that a service life of the SSD is not affected.

In another case, after identifying that the first logical address is not the hotspot address, the processor writes the target data into the second area.

When the first logical address is not the hotspot address, it indicates that the first logical address is not frequently accessed. Therefore, the target data may be written into the second area. When the second area meets the foregoing write condition, the processor writes the data in the second area into the flash memory. Because the first logical address is not frequently accessed, after the data of the first logical address is written into the flash memory, a total quantity of written data in the SSD does not increase rapidly.

S306: The processor sends response information to the host interface of the host by using the first interface.

The response information may be used to indicate that the writing succeeds.

Correspondingly, the host may output the response information indicating that the writing succeeds to the user based on the foregoing response information.

In this embodiment, the processor may pre-identify whether each logical address of the flash memory is the hotspot address. After receiving a data write instruction for the hotspot address, the processor writes target data that needs to be written into the hotspot address into the first area. The first area is used to replace storage space that is corresponding to the hotspot address and that is in the flash memory controlled by the storage controller to store the data. Therefore, frequent data access to the hotspot address may be performed in the first area instead of the flash memory, to avoid a rapid increase in a total write quantity of the SSD caused by frequent access to a very small LBA area used as the hotspot address, thereby ensuring that a service life of the SSD is not affected. The foregoing processing process is processed by the SSD, and the host side does not need to participate. In this embodiment, while the storage controller prevents some very small LBA areas from being frequently written, to ensure that the service life of the SSD is not affected, the host side does not need to participate, and the host side does not need to adapt to the SSD. Therefore, a coupling degree between the host and the SSD can be greatly reduced.

As described above, the hotspot attribute of the logical address may be obtained based on the previous access information of the logical address. Because the previous access information of the logical address can reflect whether the logical address is frequently accessed, the processor can accurately identify, based on the previous access information of the logical address, whether the logical address is the hotspot address.

When the processor needs to write the target data into the first logical address used as the hotspot address, for a hotspot address, the following two cases may exist:
In a first case, data of the hotspot address already exists in the first area.

For example, the host writes the data into the hotspot address in advance. When the host writes data into the hotspot address again, the first area already stores the previous written data of the hotspot address.

In a second case, data of the hotspot address does not exist in the first area.

For example, a logical address is determined as a hotspot address after statistics collection of a period. At a start stage of a next period, the host writes data into the hotspot address. In this case, because the hotspot address is a new hotspot address, the data of the hotspot address is not stored in the first area.

For the foregoing two cases, in an optional implementation, each hotspot address may be corresponding to cache status information, to indicate whether the data of the hotspot address already exists in the first area. For ease of description, in this application, a cache status indicating that data of a hotspot address already exists in the first area is referred to as a cached state below, and a cache status indicating that data of a hotspot address does not exist in the first area is referred to as a to-be-cached state below. In other words, for the first logical address used as the hotspot address, if cache status information indicates that data of the first logical address already exists in the first area, the cache status information is referred to as a cached state in the following embodiment. If cache status information indicates that data of the first logical address does not exist in the first area, the cache status information is referred to as a to-be-cached state in the following embodiment.

In an example, the processor may allocate, in the foregoing FTL table, one bit to each hotspot address, to record the cache status information of the hotspot address.

Correspondingly, in the foregoing step S304, when identifying that the first logical address is the hotspot address and writing the target data into the first area, the processor may read the cache status information of the first logical address from the memory, and write the target data into the first area based on the cache status information of the first logical address. Because the cache status information can accurately indicate whether the data of the first logical address already exists in the first area, writing the target data into the first area based on the cache status information can ensure correct data writing.

It should be understood that the first logical address belongs to the hotspot address. Therefore, the cache status information of the first logical address includes the cached state and the to-be-cached state. If the first logical address is in the cached state, it indicates that the data of the first logical address is cached in the first area, that is, the data of the first logical address already exists in the first area. It should be understood that the data in the first logical address is data written into the first logical address before the host indicates the target data. In addition, if the first logical address is in the to-be-cached state, it indicates that the data of the first logical address is not cached in the first area, that is, the data of the first logical address does not exist in the first area.

In an example, the processor may record, in the FTL table, a mapping relationship between the LBA used as the hotspot address and a storage location of the data of the LBA in the first area. Based on the mapping relationship, data writing and reading on the LBA may be correctly performed.

The following describes two cases in which the target data is written into the first logical address when the first logical address has different cache status information.

In a first case, if the cache status information of the first logical address is the cached state, the processor may replace the data in the first logical address in the first area with the target data.

When the cache status information of the first logical address is the cached state, it indicates that data that needs to be written into the first logical address last time already exists in the first area. Therefore, the existing data is replaced, that is, the target data is written into a location at which the data written into the first logical address last time in the first area is stored, to overwrite the previously written data, thereby ensuring correct data writing.

For example, the processor learns, by querying the FTL table in the memory, that the first logical address is the hotspot address, and the cache status information of the first logical address is the cached state. In this case, the processor may learn, based on a mapping relationship that is between the first logical address and a storage address in the first area and that is recorded in the FTL table, a storage location of the data of the first logical address in the first area, and further write the target data into the storage location, to complete a data replacement operation.

In a second case, if the cache status information of the first logical address is the to-be-cached state, the processor may write the target data into the first area as the data of the first logical address, and update the cache status information of the first logical address to information indicating that the data of the first logical address already exists in the first area, that is, update the cache status to the cached state.

If the cache status information of the first logical address is the to-be-cached state, it indicates that the data of the first logical address is not stored in the first area. Therefore, the target data may be directly written into the first area as the data of the first logical address, thereby ensuring correct data writing. In addition, after the target data is written into the first area, if the cache status information of the first logical address is updated to the cached state, it indicates that the data of the first logical address already exists in the first area. Therefore, when the host writes data into the first logical address next time, the processor may perform the foregoing replacement processing based on the cached state, thereby further ensuring correct data writing.

For example, the processor learns, by querying the FTL table, that the first logical address is the hotspot address, and the cache status information of the first logical address is the to-be-cached state. In this case, the processor first allocates a storage address to the first logical address in the first area, records a mapping relationship between the first logical address and the allocated storage address in the FTL table, and further writes the target data into the storage address, thereby completing a data write operation. Further, the processor modifies the cache status information of the first logical address in the FTL table to the cached state.

The foregoing embodiment describes a processing process when the data in the first logical address is written. Based on the foregoing processing process, when the data in the first logical address is read, the following processing process may be correspondingly performed.

Optionally, for data reading of the non-hotspot address, data on a PPN corresponding to the LBA indicated by the host may be read from the flash memory of the SSD in a conventional data reading manner based on the mapping relationship that is between the LBA and the PPN and that is recorded in the FTL table, and the data is returned to the host.

Data reading for the hotspot address may be processed in the following manner:
If the cache status information of the hotspot address is the cached state, the processor may read the data of the hotspot address from the first area, and return the data of the hotspot address to the host.

For example, the processor learns, by querying the FTL table, that a to-be-read address is the hotspot address, and the cache status information is the cached state. In this case, the processor may learn, based on a mapping relationship that is between the to-be-read address and a storage address in the first area and that is recorded in the FTL table, a storage location of data of the to-be-read address in the first area, and further reads the data from the storage location and returns the data to the host.

The foregoing first logical address is used as an example. After the host sends a data access request for reading the data in the first logical address, if the first logical address is the hotspot address, and the cache status information of the first logical address is the cached state, the processor of the SSD may read the data in the first logical address from the first area and return the data in the first logical address to the host.

If the cache status information of the hotspot address is the to-be-cached state, it indicates that the first area does not store data of the hotspot address. In this case, the processor may read the data of the hotspot address from the flash memory of the SSD and return the data to the host. Optionally, the processor may further write the data of the hotspot address in the flash memory into the first area, and modify the cache status information of the hotspot address to the cached state.

For example, the processor learns, by querying the FTL table, that a to-be-read address is the hotspot address, and the cache status information is the to-be-cached state. In this case, the processor may read the data of the hotspot address from the flash memory and return the data to the host. In addition, the processor may further write the data of the hotspot address in the flash memory into the first area, record a mapping relationship between the hotspot address and a storage address in the first area in the FTL table, and further modify the cache status information of the first logical address in the FTL table to the cached state.

The foregoing first logical address is used as an example. After the host sends a data access request for reading the data in the first logical address, if the first logical address is the hotspot address, and the cache status information of the first logical address is the to-be-cached state, the processor may read the data in the first logical address from the flash memory of the SSD and return the data to the host. Optionally, the processor may further write the data of the first logical address in the flash memory into the first area, and modify the cache status information of the hotspot address to the cached state.

After processing in the foregoing embodiment, the data of the hotspot address may be stored in the first area. As described above, the first area may be a volatile memory such as a DRAM, an MRAM, or a PCM. Therefore, when the SSD is powered off, the processor may write data of each hotspot address stored in the first area into the flash memory of the SSD.

For example, when the SSD is powered off, the processor reads the data of each hotspot address from the first area based on the mapping relationship that is between the LBA of each hotspot address and the storage address in the first area and that is recorded in the FTL table and the mapping relationship between the LBA and the PPN, and writes the data of each hotspot address into a corresponding PPN.

The foregoing embodiment describes a process in which the processor writes the data based on the hotspot attribute of the first logical address after the host sends the data write instruction to the SSD. As described above, the processor may periodically and independently obtain the hotspot attribute of each logical address. The following embodiment describes a processing process in which the processor periodically obtains the hotspot attribute.

As described in the foregoing step S304, the processor may generate, after a preset duration after the SSD is powered on, the hotspot attribute of each logical address based on the previous access information of each logical address in the SSD within the preset duration. The hotspot attribute may be used as an initial hotspot attribute of each logical address. An access frequency of each logical address may be different in a different period. Therefore, the processor may further periodically update the hotspot attribute of the logical address based on a specific period.

When the processor generates the initial hotspot attribute and periodically updates the hotspot attribute subsequently, processing manners of determining whether a logical address is a hotspot address are the same. A difference lies only in that when the hotspot attribute is periodically updated, hotspot attribute update and data migration may be involved. For ease of description, the following embodiment describes a process of updating the hotspot attribute in one period, and a distinguishing solution related to generating the initial hotspot attribute is correspondingly explained.

In a first optional implementation, the processor may update the hotspot attribute of each logical address only based on the previous access information of each logical address in the SSD.

For example, by performing statistics collection on the previous access information of each logical address, the processor may select, as the hotspot address, a logical address whose quantity of write times in this period is greater than or equal to a preset quantity of write times, or select, as the hotspot address, a preset quantity of logical addresses whose quantity of write times is the largest after being sorted based on the quantity of write times of the logical addresses in this period, to update the hotspot attribute of the hotspot address to a hotspot attribute of the non-hotspot address in this period, and update a hotspot attribute of the non-hotspot address to the hotspot attribute of the hotspot address in this period. Specific selection and update manners are the same as selection and update processes in the following second optional implementation. For details, refer to the following descriptions.

It should be noted that, if the initial hotspot attribute is generated only based on the previous access information of each logical address, after the hotspot address is selected, the hotspot attribute of each hotspot address may be modified to a mark used to identify the hotspot address.

In a second optional implementation, the processor may update the hotspot attribute of each logical address based on the previous access information of each logical address in the SSD and a capacity of the first area.

The capacity of the first area may be a quantity of logical addresses in which the first area can store data of the first area. For example, if the capacity of the first area is 1000, it indicates that the first area can store data of 1000 LBAs.

The capacity of the first area may be a preset value, and may be determined by a design manner of the SSD. In a specific implementation process, the capacity of the first area may be small. Therefore, the processor determines, based on the previous access information of each logical address and the capacity of the first area, which logical addresses are used as hotspot addresses, so that it can be ensured that a quantity of selected hotspot addresses matches the capacity of the first area. In addition, selecting the hotspot address based on the capacity of the first area can further select a better hotspot address.

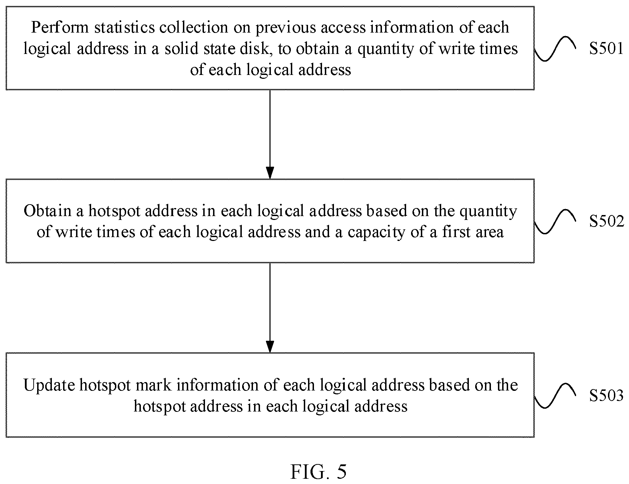

FIG. 5 is a schematic flowchart of a storage control method according to an embodiment of this application. As shown in FIG. 5, an optional manner in which the processor may update the hotspot attribute of each logical address based on the previous access information of each logical address in the SSD and the capacity of the first area includes the following steps.

S501: Perform statistics collection on the previous access information of each logical address in the solid state disk, to obtain a quantity of write times of each logical address.

It should be understood that the performing statistics collection on the previous access information of each logical address in the solid state disk refers to performing statistics collection on previous access information of each logical address in a current period. The obtaining the quantity of write times of each logical address refers to obtaining a quantity of write times of each logical address in the current period.

As described above, the previous access information of the logical address may include, for example, an access time, and an access type being write or read.

When the previous access information of the logical address is collected, sampling statistics collection may be performed on the previous access information.

Statistics collection processing on the previous access information may occupy a large quantity of processing resources of the storage controller of the SSD. Therefore, in this embodiment of this application, sampling statistics collection is performed on the previous access information, to reduce occupied processing resources. In addition, because a data access frequency of the SSD may remain stable, accuracy of a statistical result is not affected through the sampling statistics collection.

Optionally, the sampling statistics collection may be performed based on a time or a data amount. For example, the sampling statistics collection is performed based on the data amount. For a data access operation in the current period, the processor may perform statistics collection once for every 100,000 times of data accesses.

For example, the previous access information of the logical address may include an FTL journal (Journal), a data access journal, LBA update previous information temporarily stored in a cache, or the like.

The sampling statistics collection may be performed on the previous access information in either of the following manners.

In a first manner, the sampling statistics collection may be performed based on the data access journal in the current period.

In the period, each time the processor performs data access, the processor may record, in the data access journal, a time of the current data access, an access type of the current data access being write or read, and the like. Therefore, after the current period ends, the data access journal records information about all data accesses in the current period. Based on the data access journal, the processor may perform sampling statistics collection on the previous access information in the current period in a sampling manner based on the time or the data amount, to obtain a quantity of write times of each logical address in the current period. It should be understood that if the sampling statistics result does not include access information of a logical address, it may be determined that a quantity of write times of the logical address is 0.

In a second manner, real-time online sampling statistics collection can be performed in the current period.

In this manner, the processor monitors a data access operation in real time, performs sampling each time a duration lasts or a quantity of data access times reaches a quantity of times, and performs statistics collection on a result of each sampling when the current period ends, to obtain a quantity of write times of each logical address in the current period.

S502: Obtain a hotspot address in each logical address based on the quantity of write times of each logical address and the capacity of the first area.

Optionally, any one of the following manners may be used.

In a first manner, determining is performed based on the quantity of write times of each logical address and the capacity of the first area. If a difference obtained by subtracting the capacity of the first area from a quantity of logical addresses whose quantity of write times is greater than 0 is greater than or equal to a first preset threshold, a target logical address may be selected as the hotspot address. The target logical address is a logical address whose quantity of write times is greater than or equal to a first preset quantity of times, or the target logical address is a preset quantity of logical addresses whose quantity of write times is the largest after the logical addresses whose quantity of write times is greater than 0 are sorted based on the quantity of write times.

The first preset threshold may be a value of a larger order of magnitude. Correspondingly, if the difference obtained by subtracting the capacity of the first area from the quantity of logical addresses whose quantity of write times is greater than 0 is greater than or equal to the first preset threshold, it indicates that the quantity of logical addresses whose quantity of write times is greater than 0 far exceeds the capacity of the first area. When the condition is met, the selected hotspot address has better effect, and can better match the capacity of the first area. When the condition is met, the processor may use the target logical address as the hotspot address.

As described above, the target logical address may be a logical address whose quantity of write times is greater than or equal to a first preset quantity of times.

For example, the first preset quantity of times is 200. If a quantity of write times of a logical address is greater than or equal to 200, it is considered that the logical address is the target logical address, that is, the hotspot address.

The first preset quantity of times may be set based on the capacity of the first area, so that the selected hotspot address matches the capacity of the first area.

Alternatively, the target logical address may be a preset quantity of logical addresses whose quantity of write times is the largest after the logical addresses whose quantity of write times is greater than 0 are sorted based on the quantity of write times.

For example, the logical addresses whose quantity of write times is greater than 0 are sorted in the following sequence (values in the following brackets each indicate a quantity of write times of the logical address):
address 1 (100), address 2 (99), address 3 (98), address 4 (97), address 5 (97), address 6 (96), address 7 (96), address 8 (96), address 9 (96), address 10 (94)...

Assuming that the foregoing preset quantity is 6, the address 1 to the address 6 may be selected as target logical addresses, that is, hotspot addresses.

The preset quantity may be set based on the capacity of the first area, so that the selected hotspot address matches the capacity of the first area.

For example, assuming that the first area can provide 8 MB space to store data of the hotspot address, and a data length corresponding to a single LBA is 4 KB, the preset quantity may be set to 8 MB/4 KB=2K.

Alternatively, the foregoing preset quantity may be set depending on an actual service situation, so that data of as few logical addresses as possible is cached, but effect that may be equal to that of all caches (for example, the foregoing 2K) is obtained.

For example, if a total written data amount of the first 1K pieces of data can reach 80% of a data amount corresponding to the hottest 2K pieces of data, the 1K pieces of data may be selected for caching.

In this manner, after the target logical address is selected, the target logical address is directly used as the hotspot address. In the following second manner, the target logical address is determined in a manner the same as that herein, the target logical address is used as a to-be-selected hotspot address, and the hotspot address is further obtained.

In the second manner, determining is performed based on the quantity of write times of each logical address and the capacity of the first area. If a difference obtained by subtracting the capacity of the first area from a quantity of logical addresses whose quantity of write times is greater than 0 is greater than or equal to a first preset threshold, a target logical address may be selected as the to-be-selected hotspot address. A meaning and a selection manner of the target logical address are the same as those in the foregoing first manner. For details, refer to the foregoing descriptions. Details are not described herein again.

After the target logical address is selected as the to-be-selected hotspot address, an operation in any one of the following manners may be performed. In a specific implementation process, in some scenarios, the selected target logical address may be distorted to some extent. Therefore, authenticity of the target logical address may be confirmed in any one of the following manners, thereby further improving accuracy of a finally determined hotspot address.

In a first manner, if a ratio of a sum of written data amounts of the to-be-selected hotspot address to a total amount of written data, of the solid state disk, within a statistical period of the previous access information is greater than a second preset threshold, the to-be-selected hotspot address is used as the hotspot address.

For example, it is assumed that the second preset threshold is 10%, and a quantity of the to-be-selected hotspot addresses is 2K. If a sum of written data amounts of the 2K addresses is greater than or equal to 10% of a total written data amount of the SSD in this period, it may be determined that these to-be-selected hotspot addresses are hotspot addresses.

In a second manner, if a quantity of access times of a first to-be-selected hotspot address is greater than a second preset quantity of times, the first to-be-selected hotspot address is used as the hotspot address. The first to-be-selected hotspot address is any address in the to-be-selected hotspot addresses.

S503: Update the hotspot attribute of each logical address based on the hotspot address in each logical address.

The processor may establish a hotspot address set for each period in the period, to record a hotspot address in the period. Optionally, in each period, after obtaining the hotspot address by performing the foregoing steps S501 and S502, the processor records the hotspot address in the hotspot address set of the period. Optionally, in a specific implementation process, hotspot address sets of the current period and the previous period may be maintained in real time. After entering a next period of the current period, the hotspot address set of the previous period of the current period may be deleted, thereby reducing occupied resources of the SSD.

In a specific period, the processor updates a hotspot attribute based on a hotspot address set in the current period and a hotspot address set in the previous period. Optionally, the processor may update the hotspot attribute of each logical address based on a hotspot address set in a first period and a hotspot address set in a second period. The first period is a statistical period of the previous access information, and the second period is a period before the first period.

Because the hotspot address set in the first period and the hotspot address set in the second period respectively store hotspot addresses in respective periods, a change of the hotspot address from the second period to the first period may be learned based on the two hotspot address sets, and correspondingly, the hotspot attribute of each logical address may be accurately updated.

For the first period and the second period, the hotspot addresses in the respective periods may be obtained based on the foregoing steps S501 and S502, and hotspot address sets in the respective periods may be obtained.

For any address (referred to as a first address below) accessed by the SSD, in the first period and the second period, changes of the first address may include the following several cases:
Case 1: The first address belongs to the hotspot address set in the first period, and also belongs to the hotspot address set in the second period.

In this case, it indicates that the first address belongs to the hotspot address in both the first period and the second period. Therefore, the hotspot attribute of the first address does not need to be updated.

Case 2: The first address belongs to neither the hotspot address set in the first period nor the hotspot address set in the second period.

In this case, it indicates that the first address belongs to the hotspot address in neither the first period nor the second period. Therefore, the hotspot attribute of the first address does not need to be updated.

Case 3: The first address belongs to the hotspot address set in the second period, and does not belong to the hotspot address set in the first period.

In this case, it indicates that the first address belongs to the hotspot address in the second period, and no longer belongs to the hotspot address in the first period. Correspondingly, the hotspot attribute of the first address may be updated to a mark used to identify a non-hotspot address.

After the hotspot attribute of the first address is updated to the mark used to identify the non-hotspot address, after the host sends a write instruction for the first address again, data that needs to be written into the first address is no longer stored in the first area, but stored in a second area, and then written into a flash memory.

In an optional implementation, after the hotspot attribute of the first address is updated to the mark used to identify the non-hotspot address, the data of the first address in the first area may be written into the second area, and the data of the first address is deleted from the first area. When the solid state disk is in a power-on state, the data stored in the second area is written into the flash memory of the solid state disk according to a preset frequency.

Because the first address is no longer the hotspot address, an access frequency of the first address is reduced. Therefore, the data of the first address is written into the flash memory by using the second area, so that the data of the first address no longer occupies a resource of the first area, and a total write amount of the flash memory does not increase rapidly.

Case 4: The first address belongs to the hotspot address set in the first period, and does not belong to the hotspot address set in the second period.

In this case, it indicates that the first address does not belong to the hotspot address in the second period, and belongs to the hotspot address in the first period. Correspondingly, the hotspot attribute of the first address may be updated to a mark used to identify the hotspot address.

After the hotspot attribute of the first address is updated to the mark used to identify the hotspot address, and after the host sends an access instruction for the first address again, a master controller obtains or writes data of the first address in the first area.

After the updating the hotspot attribute of the first address to the mark used to identify the hotspot address, one of the following two manners may be further performed:
In a first manner, cache status information of the first address is updated to a to-be-cached state.

In this manner, if only the cache status information of the first address is updated to the to-be-cached state, it indicates that current data of the first address has not been written into the first area, and no data movement is performed.

When the first address is the hotspot address, the data of the first address is updated at a high frequency. Therefore, only the cache status information of the first address is updated to the to-be-cached state, and data movement is not performed. When the host sends a write instruction for the first address next time, the data may be directly written into the first area. Therefore, processing complexity of this manner is low, and data access to the first address is not affected.

In a second manner, data of the first address in the second area is written into the first area, the data of the first address is deleted from the second area, and the cache status information of the first address is updated to a cached state.

The data, stored in the second area, of the first address is data that needs to be written into the first address last time. The data is written into the first area, that is, data movement is performed, and the cache status information of the first address is updated to the cached state. This can ensure that before data of the first address is written next time, when the host needs to read the data of the first address, the host can quickly read the data of the first address from the first area.

It should be noted that, for the foregoing scenario in which an initial hotspot attribute is generated after the SSD is powered on, the foregoing steps S501 and S502 also need to be performed. After S502 is performed, for this scenario, the fourth processing manner in step S503 may be used, that is, the hotspot attribute of each hotspot address obtained in step S502 is updated to the mark used to identify the hotspot address. In addition, the cache status information of each hotspot address may be updated in a manner described in the foregoing fourth processing manner. It should be understood that after the SSD is powered on, the hotspot attribute of each logical address of the SSD is initialized to the mark used to identify the non-hotspot address.

An embodiment of this application further provides a solid state disk. For a schematic diagram of a structure of the solid state disk, refer to FIG. 3 and FIG. 4. Refer to FIG. 4. The solid state disk in this embodiment of this application includes a storage controller and a flash memory. In addition to a second area and an area for storing an FTL table, a memory of the storage controller further includes a first area. The processor of the storage controller may write data into the flash memory, the first area, and the second area according to the method in the foregoing method embodiment. A specific implementation process is not described again.

The foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored on a computer-readable storage medium, or transmitted from one computer-readable storage medium to another computer-readable storage medium. For example, the computer instructions may be transmitted from a website, computer, storage node, or data center to another website, computer, storage node, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a storage node or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

It should be understood that, in the embodiments of this application, the term "first" and the like are merely intended to indicate objects, but do not indicate a sequence of corresponding objects.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored on a storage medium, and includes several instructions for instructing a computer device (which may be a personal computer, a storage node, a network device, or the like) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. The protection scope of this application shall be subject to the protection scope of the claims.

## Claims

1. A storage controller, comprising a processor, and a first interface and a memory that are separately coupled to the processor;
the first interface is configured to receive data write instructions, wherein each data write instruction is used to request to write target data into a logical address of a flash memory;
the processor is configured to read, from the memory, a hotspot attribute corresponding to the respective logical address; and
if the hotspot attribute indicates that the respective logical address is a hotspot address, the processor is further configured to store the target data in a first area of the memory, wherein the first area is used to replace storage space that is corresponding to logical addresses in the flash memory controlled by the storage controller to store data,
wherein the processor is further configured to:
perform statistics collection on the previous access information of each logical address, to obtain a quantity of write times of each logical address;
obtain the hotspot addresses based on the quantity of write times of each logical address and the capacity of the first area, wherein the capacity of the first area is the quantity of logical addresses for which the first area can store data;
update the hotspot attribute of each logical address based on previous access information of each logical address;
separately write the hotspot attribute of each logical address into the memory,
**characterized in that**
for performing the obtaining of the hotspot addresses, the processor is configured to:
if the difference obtained by subtracting the capacity of the first area from the quantity of logical addresses, whose quantity of write times is greater than 0, is greater than or equal to a first preset threshold,
select those logical addresses as hotspot addresses, whose quantity of write times is greater than or equal to a first preset quantity of times, or
select a preset quantity of logical addresses as hotspot addresses, whose quantity of write times is the
largest after the logical addresses, whose quantity of write times is greater than 0, were sorted based on the quantity of write times.

2. The storage controller according to claim 1, wherein the processor is configured to:
read cache status information of the respective logical address from the memory, and write the target data into the first area based on the cache status information, wherein the cache status information indicates whether data of the respective logical address already exists in the first area.

3. The storage controller according to claim 2, wherein the processor is configured to:
if the cache status information indicates that the data of the respective logical address already exists in the first area, replace the data of the respective logical address that has been stored in the first area with the target data.

4. The storage controller according to claim 2 or 3, wherein the processor is configured to:
if the cache status information indicates that the data of the respective logical address does not exist in the first area, write the target data into the first area, and update the cache status information of the respective logical address to information indicating that the data of the respective logical address already exists in the first area.

5. The storage controller according to any one of claims 1 to 4, wherein the processor is configured to:
update the hotspot attribute of each logical address based on a hotspot address set in a first period and a hotspot address set in a second period, wherein the first period is the statistical period of the previous access information, and the second period is a period before the first period.

6. The storage controller according to claim 5, wherein the processor is configured to:
if a first address belongs to the hotspot address set in the second period but does not belong to the hotspot address set in the first period, update the hotspot attribute of the first address to an attribute used to identify a non-hotspot address, wherein the first address is any one of the logical addresses.

7. A storage control method, applied to a storage controller for flash memory, wherein the storage controller comprises a memory, the storage controller:
receiving data write instructions (S302), wherein each data write instruction is used to request to write target data into a logical address of the flash memory, wherein the method comprises for each received data write instruction:
reading (S304), from the memory, a hotspot attribute of the respective logical address; and
if (S305) the hotspot attribute indicates that the respective logical address is a hotspot address, storing the target data in a first area of the memory, wherein the first area is used to replace storage space that is corresponding to logical addresses in the flash memory to cache data to be written into the hotspot address,
wherein the method further comprises:
performing (S501) statistics collection on the previous access information of each logical address, to obtain a quantity of write times of each logical address;
obtaining (S502) the hotspot addresses based on the quantity of write times of each logical address and the capacity of the first area, wherein the capacity of the first area is the quantity of logical addresses for which the first area can store data;
updating (S503) the hotspot attribute of each logical address based on previous access information of each logical address;
separately writing the hotspot attribute of each logical address into the memory,
**characterized in that**
for performing the obtaining of the hotspot addresses, the method comprises:
if the difference obtained by subtracting the capacity of the first area from the quantity of logical addresses, whose quantity of write times is greater than 0, is greater than or equal to a first preset threshold,
selecting those logical addresses as hotspot addresses, whose quantity of write times is greater than or equal to a first preset quantity of times, or
selecting a preset quantity of logical addresses as hotspot addresses, whose quantity of write times is the largest after the logical addresses, whose quantity of write times is greater than 0, were sorted based on the quantity of write times.

8. A solid state disk, comprising: a flash memory and the storage controller according to any one of claims 1 to 6, wherein the storage controller performs data access on the flash memory by using a second interface.

9. A storage system, comprising the solid state disk according to claim 8 and a host, wherein the solid state disk communicates with the host based on the first interface of the solid state disk and a host interface of the host.

10. A computer-readable storage medium storing computer instructions, which, when executed by a computer, enable the computer to perform the method according to claim 7.

## Patentansprüche

1. Speichersteuerung, umfassend einen Prozessor und eine erste Schnittstelle und einen Speicher, die separat mit dem Prozessor gekoppelt sind;
wobei die erste Schnittstelle dazu konfiguriert ist, Datenschreibanweisungen zu empfangen, wobei jede Datenschreibanweisung verwendet wird, um ein Schreiben von Zieldaten in eine logische Adresse eines Flash-Speichers anzufordern;
wobei der Prozessor dazu konfiguriert ist, aus dem Speicher ein Hotspot-Attribut zu lesen, das der jeweiligen logischen Adresse entspricht; und
wenn das Hotspot-Attribut angibt, dass die jeweilige logische Adresse eine Hotspot-Adresse ist, der Prozessor ferner dazu konfiguriert ist, die Zieldaten in einem ersten Bereich des Speichers zu speichern, wobei der erste Bereich verwendet wird, um Speicherplatz zu ersetzen, der logischen Adressen in dem Flash-Speicher entspricht, welcher durch die Speichersteuerung gesteuert wird, um Daten zu speichern,
wobei der Prozessor ferner zu Folgendem konfiguriert ist:
Durchführen einer Statistikerfassung der vorherigen Zugriffsinformationen jeder logischen Adresse, um eine Anzahl der Schreibvorgänge jeder logischen Adresse zu erlangen;
Erlangen der Hotspot-Adressen basierend auf der Anzahl der Schreibvorgänge jeder logischen Adresse und der Kapazität des ersten Bereiches, wobei die Kapazität des ersten Bereiches die Anzahl der logischen Adressen ist, für die der erste Bereich Daten speichern kann;
Aktualisieren des Hotspot-Attributs jeder logischen Adresse basierend auf den vorherigen Zugriffsinformationen jeder logischen Adresse;
separates Schreiben des Hotspot-Attributs jeder logischen Adresse in den Speicher,
**dadurch gekennzeichnet, dass**
zum Durchführen des Erlangens der Hotspot-Adressen der Prozessor zu Folgendem konfiguriert ist:
wenn die Differenz, die durch Subtrahieren der Kapazität des ersten Bereiches von der Anzahl der logischen Adressen, deren Anzahl der Schreibvorgänge größer als 0 ist, erlangt wird, größer oder gleich einem ersten zuvor festgelegten Schwellenwert ist,
Auswählen derjenigen logischen Adressen als Hotspot-Adressen, deren Anzahl der Schreibvorgänge größer oder gleich einer ersten zuvor festgelegten Anzahl der Vorgänge ist, oder
Auswählen einer zuvor festgelegten Anzahl der logischen Adressen als Hotspot-Adressen, deren Anzahl der Schreibvorgänge am größten ist, nachdem die logischen Adressen, deren Anzahl der Schreibvorgänge größer als 0 ist, basierend auf der Anzahl der Schreibvorgänge sortiert wurden.

2. Speichersteuerung nach Anspruch 1, wobei der Prozessor zu Folgendem konfiguriert ist:
Lesen von Cache-Statusinformationen der jeweiligen logischen Adresse aus dem Speicher und Schreiben der Zieldaten in den ersten Bereich basierend auf den Cache-Statusinformationen, wobei die Cache-Statusinformationen angeben, ob Daten der jeweiligen logischen Adresse bereits in dem ersten Bereich vorhanden sind.

3. Speichersteuerung nach Anspruch 2, wobei der Prozessor zu Folgendem konfiguriert ist:
wenn die Cache-Statusinformationen angeben, dass die Daten der jeweiligen logischen Adresse bereits in dem ersten Bereich vorhanden sind, Ersetzen der Daten der jeweiligen logischen Adresse, die in dem ersten Bereich gespeichert wurden, mit den Zieldaten.

4. Speichersteuerung nach Anspruch 2 oder 3, wobei der Prozessor zu Folgendem konfiguriert ist:
wenn die Cache-Statusinformationen angeben, dass die Daten der jeweiligen logischen Adresse nicht in dem ersten Bereich vorhanden sind, Schreiben der Zieldaten in den ersten Bereich und Aktualisieren der Cache-Statusinformationen der jeweiligen logischen Adresse auf Informationen, die angeben, dass die Daten der jeweiligen logischen Adresse bereits in dem ersten Bereich vorhanden sind.

5. Speichersteuerung nach einem der Ansprüche 1 bis 4, wobei der Prozessor zu Folgendem konfiguriert ist:
Aktualisieren des Hotspot-Attributs jeder logischen Adresse basierend auf einer Hotspot-Adresse, die in einem ersten Zeitraum festgelegt wurde, und einer Hotspot-Adresse, die in einem zweiten Zeitraum festgelegt wurde, wobei der erste Zeitraum der statistische Zeitraum der vorherigen Zugriffsinformationen ist und der zweite Zeitraum ein Zeitraum vor dem ersten Zeitraum ist.

6. Speichersteuerung nach Anspruch 5, wobei der Prozessor zu Folgendem konfiguriert ist:
wenn eine erste Adresse zu der in dem zweiten Zeitraum festgelegten Hotspot-Adresse gehört, aber nicht zu der in dem ersten Zeitraum festgelegten Hotspot-Adresse gehört, Aktualisieren des Hotspot-Attributs der ersten Adresse auf ein Attribut, das verwendet wird, um eine Nicht-Hotspot-Adresse zu identifizieren, wobei die erste Adresse eine beliebige der logischen Adressen ist.

7. Speichersteuerverfahren, das auf eine Speichersteuerung für Flash-Speicher angewendet wird, wobei die Speichersteuerung einen Speicher umfasst, wobei die Speichersteuerung:
Datenschreibanweisungen empfängt (S302), wobei jede Datenschreibanweisung verwendet wird, um ein Schreiben von Zieldaten in eine logische Adresse des Flash-Speichers anzufordern, wobei das Verfahren für jede empfangene Datenschreibanweisung Folgendes umfasst:
Lesen (S304) eines Hotspot-Attributs der jeweiligen logischen Adresse aus dem Speicher; und
wenn (S305) das Hotspot-Attribut angibt, dass die jeweilige logische Adresse eine Hotspot-Adresse ist, Speichern der Zieldaten in einem ersten Bereich des Speichers, wobei der erste Bereich verwendet wird, um Speicherplatz zu ersetzen, der logischen Adressen in dem Flash-Speicher entspricht, um Daten zwischenzuspeichern, die in die Hotspot-Adresse zu schreiben sind, wobei das Verfahren ferner Folgendes umfasst:
Durchführen (S501) einer Statistikerfassung der vorherigen Zugriffsinformationen jeder logischen Adresse, um eine Anzahl der Schreibvorgänge jeder logischen Adresse zu erlangen;
Erlangen (S502) der Hotspot-Adressen basierend auf der Anzahl der Schreibvorgänge jeder logischen Adresse und der Kapazität des ersten Bereiches, wobei die Kapazität des ersten Bereiches die Anzahl der logischen Adressen ist, für die der erste Bereich Daten speichern kann;
Aktualisieren (S503) des Hotspot-Attributs jeder logischen Adresse basierend auf den vorherigen Zugriffsinformationen jeder logischen Adresse;
separates Schreiben des Hotspot-Attributs jeder logischen Adresse in den Speicher,
**dadurch gekennzeichnet, dass**
zum Durchführen des Erlangens der Hotspot-Adressen das Verfahren Folgendes umfasst:
wenn die Differenz, die durch Subtrahieren der Kapazität des ersten Bereiches von der Anzahl der logischen Adressen, deren Anzahl der Schreibvorgänge größer als 0 ist, erlangt wird, größer oder gleich einem ersten zuvor festgelegten Schwellenwert ist,
Auswählen derjenigen logischen Adressen als Hotspot-Adressen, deren Anzahl der Schreibvorgänge größer oder gleich einer ersten zuvor festgelegten Anzahl der Vorgänge ist, oder
Auswählen einer zuvor festgelegten Anzahl der logischen Adressen als Hotspot-Adressen, deren Anzahl der Schreibvorgänge am größten ist, nachdem die logischen Adressen, deren Anzahl der Schreibvorgänge größer als 0 ist, basierend auf der Anzahl der Schreibvorgänge sortiert wurden.

8. Festkörperplatte, umfassend: einen Flash-Speicher und die Speichersteuerung nach einem der Ansprüche 1 bis 6, wobei die Speichersteuerung den Datenzugriff auf den Flash-Speicher unter Verwendung einer zweiten Schnittstelle durchführt.

9. Speichersystem, umfassend die Festkörperplatte nach Anspruch 8 und einen Host, wobei die Festkörperplatte basierend auf der ersten Schnittstelle der Festkörperplatte und einer Host-Schnittstelle des Hosts mit dem Host kommuniziert.

10. Computerlesbares Speichermedium, das Computeranweisungen speichert, die, wenn sie durch einen Computer ausgeführt werden, den Computer dazu befähigen, das Verfahren nach Anspruch 7 durchzuführen.

## Revendications

1. Contrôleur de stockage, comprenant un processeur, et une première interface et une mémoire qui sont couplées séparément au processeur ;
la première interface est configurée pour recevoir des instructions d'écriture de données, dans lequel chaque instruction d'écriture de données est utilisée pour demander l'écriture de données cibles dans une adresse logique d'une mémoire flash ;
le processeur est configuré pour lire, dans la mémoire, un attribut de point d'accès correspondant à l'adresse logique respective ; et si l'attribut de point d'accès indique que l'adresse logique respective est une adresse de point d'accès, le processeur est également configuré pour stocker les données cibles dans une première zone de la mémoire, dans lequel la première zone est utilisée pour remplacer l'espace de stockage qui correspond aux adresses logiques dans la mémoire flash contrôlée par le contrôleur de stockage pour stocker les données,
dans lequel le processeur est également configuré pour :
effectuer une collecte de statistiques sur les informations d'accès précédentes de chaque adresse logique, pour obtenir une quantité de temps d'écriture de chaque adresse logique ;
obtenir les adresses de points d'accès sur la base de la quantité de temps d'écriture de chaque adresse logique et de la capacité de la première zone, dans lequel la capacité de la première zone est la quantité d'adresses logiques pour lesquelles la première zone peut stocker des données ;
mettre à jour l'attribut de point d'accès de chaque adresse logique sur la base d'informations d'accès précédentes de chaque adresse logique ;
écrire séparément l'attribut de point d'accès de chaque adresse logique dans la mémoire,
**caractérisé en ce que**
pour effectuer l'obtention des adresses de points d'accès, le processeur est configuré pour :
si la différence obtenue en soustrayant la capacité de la première zone à la quantité d'adresses logiques, dont la quantité de temps d'écriture est supérieure à 0, est supérieure ou égale à un premier seuil prédéfini,
sélectionner ces adresses logiques comme adresses de points d'accès, dont la quantité de temps d'écriture est supérieure ou égale à une première quantité de fois prédéfinie, ou
sélectionner une quantité prédéfinie d'adresses logiques en tant qu'adresses de points d'accès, dont la quantité de temps d'écriture est la plus grande après que les adresses logiques, dont la quantité de temps d'écriture est supérieure à 0, ont été triées sur la base de la quantité de temps d'écriture.

2. Contrôleur de stockage selon la revendication 1, dans lequel le processeur est configuré pour :
lire des informations d'état de cache de l'adresse logique respective dans la mémoire, et écrire les données cibles dans la première zone sur la base des informations d'état de cache, dans lequel les informations d'état de cache indiquent si des données de l'adresse logique respective existent déjà dans la première zone.

3. Contrôleur de stockage selon la revendication 2, dans lequel le processeur est configuré pour :
si les informations d'état du cache indiquent que les données de l'adresse logique respective existent déjà dans la première zone, remplacer les données de l'adresse logique respective qui ont été stockées dans la première zone par les données cibles.

4. Contrôleur de stockage selon la revendication 2 ou 3, dans lequel le processeur est configuré pour :
si les informations d'état de cache indiquent que les données de l'adresse logique respective n'existent pas dans la première zone, écrire les données cibles dans la première zone, et mettre à jour les informations d'état de cache de l'adresse logique respective avec des informations indiquant que les données de l'adresse logique respective existent déjà dans la première zone.

5. Contrôleur de stockage selon l'une quelconque des revendications 1 à 4, dans lequel le processeur est configuré pour :
mettre à jour l'attribut de point d'accès de chaque adresse logique sur la base d'une adresse de point d'accès définie dans une première période et d'une adresse de point d'accès définie dans une seconde période, dans lequel la première période est la période statistique des informations d'accès précédentes, et la seconde période est une période avant la première période.

6. Contrôleur de stockage selon la revendication 5, dans lequel le processeur est configuré pour :
si une première adresse appartient à l'adresse de point d'accès définie dans la seconde période mais n'appartient pas à l'adresse de point d'accès définie dans la première période, mettre à jour l'attribut de point d'accès de la première adresse en un attribut utilisé pour identifier une adresse non point d'accès, dans lequel la première adresse est l'une des adresses logiques.

7. Procédé de contrôle de stockage, appliqué à un contrôleur de stockage pour mémoire flash, dans lequel le contrôleur de stockage comprend une mémoire, le contrôleur de stockage :
recevant des instructions d'écriture de données (S302), dans lequel chaque instruction d'écriture de données est utilisée pour demander l'écriture de données cibles dans une adresse logique de la mémoire flash, dans lequel le procédé comprend, pour chaque instruction d'écriture de données reçue :
la lecture (S304), à partir de la mémoire, d'un attribut de point d'accès de l'adresse logique respective ; et
si (S305) l'attribut de point d'accès indique que l'adresse logique respective est une adresse de point d'accès, le stockage des données cibles dans une première zone de la mémoire, dans lequel la première zone est utilisée pour remplacer l'espace de stockage qui correspond aux adresses logiques dans la mémoire flash pour mettre en cache les données à écrire dans l'adresse de point d'accès,
dans lequel le procédé comprend également :
la réalisation (S501) d'une collecte de statistiques sur les informations d'accès précédentes de chaque adresse logique, pour obtenir une quantité de temps d'écriture de chaque adresse logique ;
l'obtention (S502) des adresses de points d'accès sur la base de la quantité de temps d'écriture de chaque adresse logique et de la capacité de la première zone, dans lequel la capacité de la première zone est la quantité d'adresses logiques pour lesquelles la première zone peut stocker des données ;
la mise à jour (S503) de l'attribut de point d'accès de chaque adresse logique sur la base d'informations d'accès précédentes de chaque adresse logique ;
l'écriture séparée de l'attribut de point d'accès de chaque adresse logique dans la mémoire,
**caractérisé en ce que**
pour effectuer l'obtention des adresses de points d'accès, le procédé comprend :
si la différence obtenue en soustrayant la capacité de la première zone à la quantité d'adresses logiques, dont la quantité de temps d'écriture est supérieure à 0, est supérieure ou égale à un premier seuil prédéfini,
la sélection de ces adresses logiques comme adresses de points d'accès, dont la quantité de temps d'écriture est supérieure ou égale à une première quantité de fois prédéfinie, ou
la sélection d'une quantité prédéfinie d'adresses logiques en tant qu'adresses de points d'accès, dont la quantité de temps d'écriture est la plus grande après que les adresses logiques, dont la quantité de temps d'écriture est supérieure à 0, ont été triées sur la base de la quantité de temps d'écriture.

8. Disque à semi-conducteurs, comprenant : une mémoire flash et le contrôleur de stockage selon l'une quelconque des revendications 1 à 6, dans lequel le contrôleur de stockage effectue un accès aux données sur la mémoire flash à l'aide d'une seconde interface.

9. Système de stockage, comprenant le disque à semi-conducteurs selon la revendication 8 et un hôte, dans lequel le disque à semi-conducteurs communique avec l'hôte sur la base de la première interface du disque à semi-conducteurs et d'une interface hôte de l'hôte.

10. Support de stockage lisible par ordinateur stockant des instructions informatiques qui, lorsqu'elles sont exécutées par un ordinateur, permettent à l'ordinateur d'exécuter le procédé selon la revendication 7.
